# EUROPÄISCHE PATENTSCHRIFT

(11) **EP 1 316 695 B1**
(45) Veröffentlichungstag und Bekanntmachung des Hinweises auf die Patenterteilung: **20.12.2006**
(21) Anmeldenummer: 01128617.6
(22) Anmeldetag: 30.11.2001
(51) Int. Cl.: F01P 7/04, F16D 35/02, F04D 27/02

(54) **Regelung für einen Lüfter eines Kühlsystems eines Verbrennungsmotors**
Fan control of a cooling system of an internal combustion engine
Commande pour un ventilateur d'un système de refroidissement d'un moteur à combustion interne

(43) Veröffentlichungstag der Anmeldung: 04.06.2003
(73) Patentinhaber: BorgWarner Inc., Auburn Hills MI 48326 (US)
(72) Erfinder: Buchholz, Thomas, 88709 Meersburg (DE)
(74) Vertreter: Patentanwälte Westphal, Mussgnug & Partner

(56) Entgegenhaltungen:
- EP-A- 1 085 180
- US-A- 6 079 536

## Beschreibung

Die Erfindung betrifft eine Regelung für einen Lüfter eines Kühlsystems eines Verbrennungsmotors gemäß dem Oberbegriff des Anspruchs 1.

Bei einem über eine Viskositätskupplung (Flüssigkeitsreibungskupplung) angetriebenen Lüfter für das Kühlsystem eines Verbrennungsmotors für Kraftfahrzeuge ist es bekannt, die Temperatur des Kühlsystems dadurch zu regeln, dass der Schlupf der Viskositätskupplung durch einen Regler gesteuert wird. Bei zunehmendem Kühlungsbedarf wird dabei der Zuschaltgrad der Viskositätskupplung, d. h. das Verhältnis von Abtriebsdrehzahl zu Antriebsdrehzahl zunehmend erhöht. Mit Zunahme dieses Verhältnisses, d. h. mit Verringerung des Schlupfes vergrößert sich jedoch die Verzögerungszeit, die benötigt wird, um das Viskosefluid aus dem Arbeitsraum der Kupplung abzuführen und den Zuschaltgrad der Kupplung wieder auf einen niedrigeren benötigten Wert abzusenken. Diese Nachlaufzeit der Viskositätskupplung bei hohem Zuschaltgrad hat den Nachteil, dass bei einer Abnahme der Motorlast der Lüfter unnötig nachläuft. Dieses Nachlaufen führt einerseits zu einer nachteiligen Kühlung des Motors und bedeutet andererseits einen überflüssigen Energie- und Kraftstoffverbrauch.

Der Erfindung liegt die Aufgabe zugrunde, eine Regelung für den Lüfter des Kühlsystems eines Verbrennungsmotors zu schaffen, die diese Nachteile beseitigt und den Energie- und Kraftstoffverbrauch des Motors verringert.

Diese Aufgabe wird erfindungsgemäß gelöst durch eine Regelung mit den Merkmalen des Anspruchs 1.

Vorteilhafte Ausführungen der Erfindung sind in den Unteransprüchen angegeben.

Erfindungsgemäß wird die Tatsache ausgenutzt, dass die Nachlaufzeit beim Absenken der Drehzahl des Lüfters erst oberhalb eines gewissen Wertes des Verhältnisses von Abtriebsdrehzahl zur Antriebsdrehzahl erheblich ins Gewicht fällt. Daher wird eine Schlupfbegrenzung eingesetzt, die das Verhältnis von Abtriebsdrehzahl zur Antriebsdrehzahl (Engagement) unter einem vorgebbaren Grenzwert hält, d. h. unter dem Grenzwert, oberhalb welchem die Nachlaufzeit des Lüfters stark zunimmt. Durch diese Schlupfbegrenzung wird während des größten Teils des Betriebs des Verbrennungsmotors die Kühlung nicht beeinflußt, da die erforderliche Kühlleistung bei der durchschnittlichen Motorleistung unter dem Wert bleibt, an welchem die Schlupfbegrenzung wirksam wird.

Steigt die Motortemperatur in Fällen hoher Motorbelastung an, so dass die durch die Schlupfbegrenzung gedrosselte Kühlleistung des Lüfters nicht mehr ausreicht, so wird erfindungsgemäß ein Überhitzungsschutz wirksam, der die Schlupfbegrenzung außer Funktion setzt, so dass der Zuschaltgrad der Viskositätskupplung, d. h. das Verhältnis von Abtriebsdrehzahl zur Antriebsdrehzahl über den vorgegebenen Grenzwert der Schlupfbegrenzung ansteigen kann. Der nachteilige Nachlauf des Lüfters mit einem unnötigen Energie- und Kraftstoffverbrauch tritt daher nur in den wenigen Fällen auf, in welchen tatsächlich die hohe Kühlleistung benötigt wird.

In einer vorteilhaften Ausführung der Erfindung wird der Lüfter durch einen Regler gesteuert, dem einerseits die Soll-Temperatur des Kühlsystems und andererseits die gemessene Ist-Temperatur des Kühlsystems zugeführt werden. Diesem Regler ist die Schlupfbegrenzung nachgeschaltet, so dass der Regler in herkömmlicher Weise wirksam wird, solange das Verhältnis von Abtriebsdrehzahl zu Antriebsdrehzahl unter dem vorgebbaren Grenzwert liegt. Wird dieser Grenzwert überschritten, so verhindert die Schlupfbegrenzung eine weitere Zunahme des Verhältnisses von Abtriebsdrehzahl zu Antriebsdrehzahl und begrenzt somit die Lüfterleistung. Parallel zu dem Regler mit der nachgeschalteten Schlupfbegrenzung wird die gemessene Ist-Temperatur des Kühlsystems dem Überhitzungsschutz zugeführt, dem eine kritische Temperatur vorgegeben wird, die höher als die dem Regler vorgegebene Soll-Temperatur liegt. Wird diese kritische Temperatur überschritten, so wird über eine Prioritätslogik die Steuerung des Lüfters über den Regler außer Funktion gesetzt und der Lüfter kann auf seinen maximalen Zuschaltgrad hochgefahren werden, bei welchem das Verhältnis von Abtriebsdrehzahl zu Antriebsdrehzahl gegen 100 % geht.

Im Folgenden wird die Erfindung anhand eines in der Zeichnung dargestellten Ausführungsbeispiels näher erläutert:

Es zeigen
- Figur 1: ein Blockdiagramm der gesamten Regelung,
- Figur 2: in einem Diagramm die Abhängigkeit der Nachlaufzeit des Lüfters von dem Verhältnis von Abtriebsdrehzahl zu Antriebsdrehzahl und
- Figur 3: in einem Diagramm die Abtriebsdrehzahl des erfindungsgemäß geregelten Lüfters in Abhängigkeit von der Temperatur des Kühlsystems.

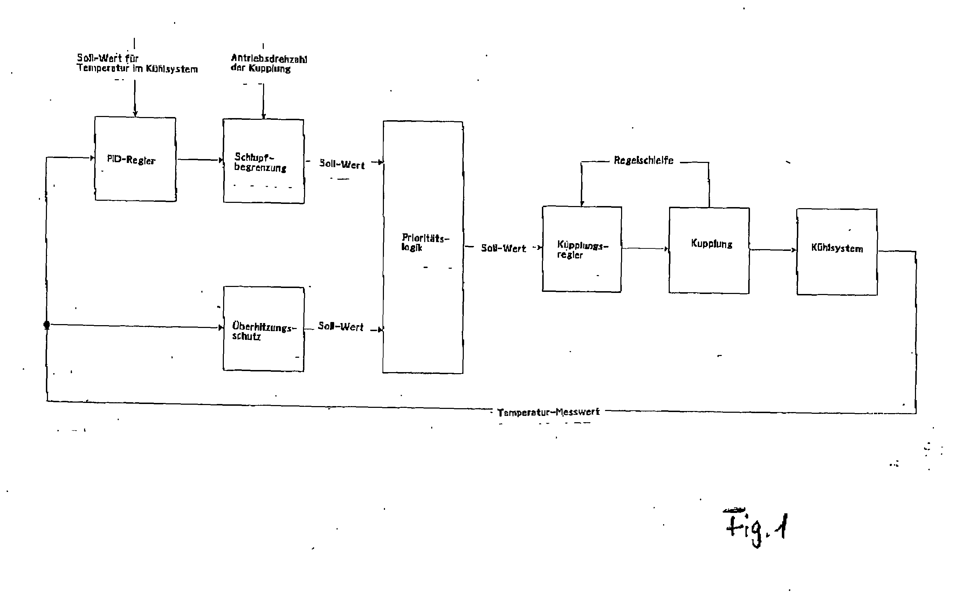

Figur 1 zeigt ein Blockdiagramm der erfindungsgemäßen Regelung eines Lüfters für das Kühlsystem des Verbrennungsmotors eines Kraftfahrzeugs.

Ein nicht dargestellter Lüfter wird über eine Viskositätskupplung angetrieben. In einer internen schnellen Regelschleife wird die Drehzahl des Lüfters über die Kupplung geregelt. Hierzu dient ein Kupplungsregler, dem als Soll-Wert eine Soll-Drehzahl zugeführt wird. Über eine Regelschleife wird die gemessene Lüfterdrehzahl dem Kupplungsregler als Ist-Wert zugeführt.

Der Lüfter wirkt auf das Kühlsystem des Verbrennungsmotors ein, um die Temperatur des Kühlmittels zu regeln. Die Temperatur des Kühlmittels in dem Kühlsystem wird gemessen und der Temperatur-Messwert wird als Ist-Wert einem Regler zugeführt, der als PID-Regler ausgebildet ist. Diesem Regler wird der Soll-Wert für die. Temperatur im Kühlsystem zugeführt. Der Regelabweichung entsprechend gibt der Regler ein Stellsignal als Soll-Wert an den Kupplungsregler.

Dieses Stellsignal wird über eine dem Regler nachgeschaltete Schlupfbegrenzung und eine Prioritätslogik zu dem Kupplungsregler geführt.

Der Sehlupfbegrenzung wird die Antriebsdrehzahl der Viskositätskupplung zugeführt, die sich aus der Motordrehzahl und ggf. einem Übersetzungsverhältnis ergibt. Die Schlupfbegrenzung begrenzt die von dem Regler als Stellgröße dem Kupplungsregler zugeführte Soll-Drehzahl auf einen vorgebbaren Grenzwert von x % der Antriebsdrehzahl. Solange die von dem Regler als Stellgröße gelieferte Soll-Antriebsdrehzahl kleiner ist als der vorgegebene Grenzwert von x % der Antriebsdrehzahl überträgt die Schlupfbegrenzung diese von dem Regler gelieferte Soll-Antriebsdrehzahl unverändert als Soll-Wert zu dem Kupplungsregler. Steigt die von dem Regler als Stellgröße gelieferte Antriebsdrehzahl über den Grenzwert von x % der Antriebsdrehzahl so liefert die Schlupfbegrenzung nur diesen vorgegebenen Grenzwert von x % der Antriebsdrehzahl als Soll-Drehzahl an den Kupplungsregler.

Die in dem Kühlsystem gemessene Kühlmittel-Temperatur wird parallel zu dem Regler auch einem Überhitzungsschutz zugeführt. Der Überhitzungsschutz vergleicht die gemessene Kühlmittel-Temperatur mit einer vorgebbaren kritischen Temperatur, die oberhalb der Soll-Temperatur des Kühlsystems liegt und unterhalb der Kühlmittel-Temperatur, die zu einer Schädigung des Motors bzw. des Kühlsystems führt. Überschreitet die gemessene Kühlmittel-Temperatur die vorgegebene kritische Temperatur so liefert der Überhitzungsschutz einen Soll-Wert der Antriebsdrehzahl über die Prioritätslogik an den Kupplungsregler die einer maximalen Antriebsdrehzahl entspricht.

Die Prioritätslogik leitet das von dem Regler über die Schlupfbegrenzung kommende Signal der Antriebsdrehzahl an den Kupplungsregler, solange kein Signal von dem Überhitzungsschutz anliegt. Kommt ein Signal von dem Überhitzungsschutz so wird dieses von der Prioritätslogik zu dem Kupplungsregler geleitet und das von dem Regler kommende Signal gesperrt.

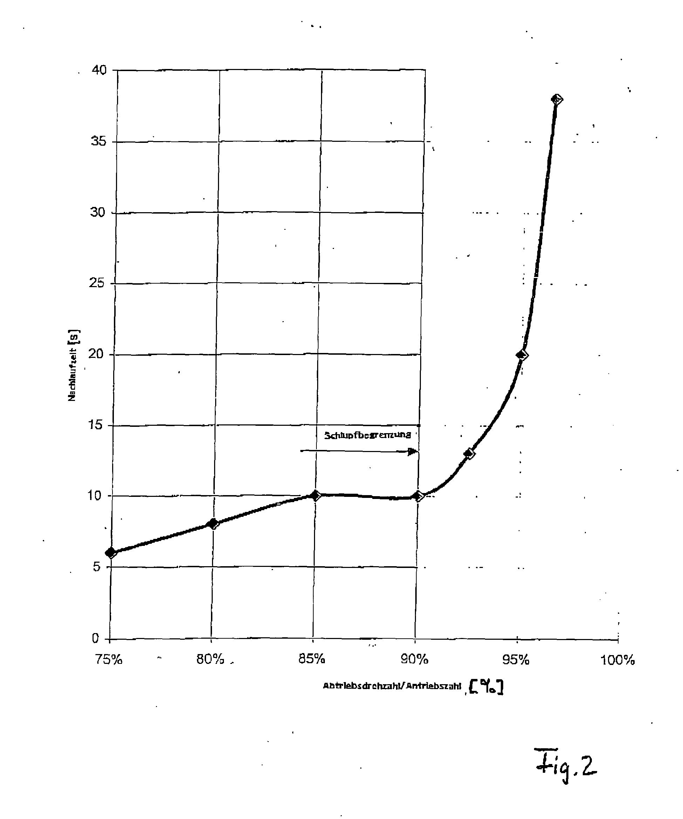

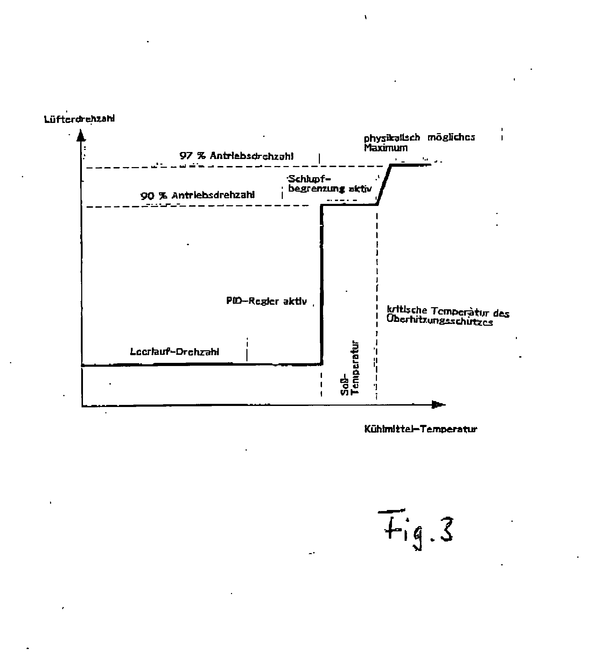

Zur Erläuterung der Funktion der Regelung wird zunächst auf Figur 2 Bezug genommen.

In dem Diagramm der Figur 2 sind die gemessenen Nachlaufzeiten eines Lüfters in Sekunden in Abhängigkeit von dem Verhältnis von Abtriebsdrehzahl zu Antriebsdrehzahl in Prozent aufgetragen. Die Nachlaufzeit ist dabei als die Zeitspanne definiert, in welcher nach Wegnahme des Soll-Wertes der Antriebsdrehzahl an dem Kupplungsregler die Abtriebsdrehzahl der Viskositätskupplung auf 1/e, d. h. um 63 % abgefallen ist.

Wie Figur 2 zeigt, steigt die Nachlaufzeit bei einem Anwachsen des Verhältnisses von Abtriebsdrehzahl zur Antriebsdrehzahl von 75 % auf 90 % nur wenig von etwa 6 Sekunden auf 10 Sekunden an. Bei einem Verhältnis über 90 % ergibt sich dagegen ein zunehmend steiles Ansteigen der Nachlaufzeit, die beispielsweise bei einem Verhältnis von 97 % auf ca. 38 Sekunden angewachsen ist. Erfindungsgemäß würde bei einem solchen Verlauf der Schlupfbegrenzung ein Grenzwert (x %) von 90 % vorgegeben, d. h. ein Grenzwert der noch unterhalb des steilen Anstiegs der Nachlaufzeit liegt.
Die Arbeitsweise der Regelung wird anhand des Diagramms der Figur 3 deutlich, in welcher die Lüfter-Drehzahl in Abhängigkeit von der Kühlmittel-Temperatur aufgetragen ist. Bei niedrigen Kühlmittel-Temperaturen läuft der Lüfter mit niedriger konstanter Leerlauf-Drehzahl. Sobald die Temperatur in dem Kühlsystem die Soll-Temperatur erreicht, wird der Regler wirksam . Die Regelung hält die Temperatur des Kühlmittels auf dem vorgegebenen Sollwert konstant, indem die Abtriebsdrehzahl der Viskositätskupplung bzw. die Drehzahl des Lüfters gesteuert wird. In diesem Bereich befindet sich die Regelung in den normalen Betriebszuständen des Verbrennungsmotors, d. h. während des größten Teils des Fahrbetriebs des Kraftfahrzeugs. Tritt unter besonderer Motorbelastung eine stärkere Erwärmung des Kühlmittels auf, so würde eine Soll-Drehzahl für den Kupplungsregler erforderlich sein, die den vorgegebenen Grenzwert der Schlupfbegrenzung von beispielsweise 90 % der Antriebsdrehzahl überschreitet. Nun wird die Schlupfbegrenzung wirksam und hält die dem Kupplungsregler vorgegebene Soll-Drehzahl auf dem vorgegebenen Grenzwert der Schlupfbegrenzung von beispielsweise 90 %. Da durch die Wirkung der Schlupfbegrenzung die Drehzahl des Lüfters nicht ansteigt, kann die Kühlmitteltemperatur über den Soll-Wert des Reglers ansteigen. Steigt die Kühlmitteltemperatur dabei über die dem Überhitzungsschutz vorgegebene kritische Temperatur so wird von dem Überhitzungsschutz über die Prioritätslogik dem Kupplungsregler eine Soll-Antriebsdrehzahl vorgegeben, die vorzugsweise über der maximalen Drehzahl liegt. Dadurch nimmt das Verhältnis von Abtriebsdrehzahl zu Antriebsdrehzahl der Viskositätskupplung den physikalisch maximal möglichen Wert an, der beispielsweise bei 97 % liegt. Die Viskositätskupplung ist daher bei minimalem Schlupf maximal in Eingriff, so dass der Lüfter die maximal mögliche Kühlleistung abgibt. Sinkt die Kühlmitteltemperatur wieder unter die kritische Temperatur des Überhitzungsschutzes ab, so gibt der Überhitzungsschutz kein Ausgangssignal und der Regler mit der Schlupfbegrenzung wird nach Abfallen der Lüfter-Drehzahl mit der Nachlaufzeit wieder wirksam.

Durch die Begrenzung des Verhältnisses von Abtriebsdrehzahl zu Antriebsdrehzahl mittels der Schlupfbegrenzung werden längere Nachlaufzeiten des Lüfters und der damit verbundene Energieverlust und Kraftstoffverbrauch in einem Temperaturbereich unterhalb der kritischen Temperatur des Überhitzungsschutzes vermieden. Die Nachteile der längeren Nachlaufzeiten treten nur in Ausnahmefällen bei starker Motorbelastung auf.

## Patentansprüche

1. Regelung für einen Lüfter eines Kühlsystems eines Verbrennungsmotors eines Kraftfahrzeugs, mit einer den Lüfter antreibenden Viskositätskupplung und mit einem Regler, dem die Soll-Temperatur und die gemessene Ist-Temperature des Kühlsystems zugeführt werden,
**dadurch gekennzeichnet, dass** eine Schlupfbegrenzung das Verhältnis von Abtriebsdrehzahl zu Antriebsdrehzahl der Viskositätskupplung unter einem vorgebbaren Grenzwert hält und dass ein Überhitzungsschutz die Viskositätskupplung unabhängig von der Schlupfbegrenzung mit maximalem Verhältnis von Abtriebsdrehzahl zu Antriebsdrehzahl steuert, wenn die Ist-Temperatur des Kühlsystems eine vorgebbare kritische Temperatur überschreitet, die höher als die Soll-Temperatur ist.

2. Regelung nach Anspruch 1,
**dadurch gekennzeichnet, dass** der Regler ein PID-Regler ist.

3. Regelung nach Anspruch 1 oder 2,
**dadurch gekennzeichnet, dass** die Schlupfbegrenzung dem Regler nachgeschaltet ist, dass die Schlupfbegrenzung die Stellgröße des Reglers als Soll-Antriebsdrehzahl der Viskositätskupplung zuführt, wenn das Verhältnis von Abtriebsdrehzahl zu Antriebsdrehzahl unter dem vorgebbaren Grenzwert liegt, und dass die Schlupfbegrenzung der Viskositätskupplung eine diesem vorgebbaren Grenzwert entsprechende Soll-. Antriebsdrehzahl zuführt, wenn dieser Grenzwert überschritten wird.

4. Regelung nach einem der vorhergehenden Ansprüche,
**dadurch gekennzeichnet, dass** die Ist-Temperatur parallel dem Regler und dem Überhitzungsschutz zugeführt wird.

5. Regelung nach einem der vorhergehenden Ansprüche,
**dadurch gekennzeichnet, dass** die Stellsignale des Reglers mit der Schlupfbegrenzung und des Überhitzungsschutzes der Viskositätskupplung über eine Prioritätslogik zugeführt werden, die das Stellsignal des Regler mit Schlupfbegrenzung sperrt, wenn der Überhitzungsschutz ein Stellsignal liefert.

## Claims

1. Closed-loop control system for a fan of a cooling system of an internal combustion engine of a motor vehicle, having a viscosity clutch that drives the fan and having a controller, to which the setpoint temperature and the measured actual temperature of the cooling system are supplied,
**characterized in that** a slip-limiting device keeps the ratio of output speed to input speed of the viscosity clutch below a definable limit value and that an overheating protection device controls the viscosity clutch independently of the slip-limiting device with a maximum ratio of output speed to input speed when the actual temperature of the cooling system exceeds a definable critical temperature that is higher than the setpoint temperature.

2. Closed-loop control system according to claim 1,
**characterized in that** the controller is a PID controller.

3. Closed-loop control system according to claim 1 or 2,
**characterized in that** the slip-limiting device is connected downstream of the controller, that the slip-limiting device supplies the manipulated variable of the controller as the setpoint input speed of the viscosity clutch when the ratio of output speed to input speed lies below the definable limit value, and that the slip-limiting device supplies to the viscosity clutch a setpoint input speed corresponding to said definable limit value when said limit value is exceeded.

4. Closed-loop control system according to one of the preceding claims,
**characterized in that** the actual temperature is supplied in parallel to the controller and the overheating protection device.

5. Closed-loop control system according to one of the preceding claims,
**characterized in that** the control signals of the controller with the slip-limiting device and of the overheating protection device are supplied to the viscosity clutch via a priority logic, which blocks the control signal of the controller with the slip-limiting device when the overheating protection device delivers a control signal.

## Revendications

1. Commande pour un ventilateur d'un système de refroidissement d'un moteur à combustion interne, avec un visco-coupleur entraînant le ventilateur et un régulateur, dans lequel sont envoyées la température de consigne et la température effective mesurée dans le système de refroidissement, **caractérisée en ce qu'**un limiteur à glissement maintient le rapport entre la vitesse de rotation de sortie et la vitesse de rotation d'entrée du visco-coupleur en dessous d'une valeur limite prédéterminée, et **en ce qu'**une protection de surchauffage commande le visco-coupleur indépendamment du limiteur à glissement avec le rapport maximal entre la vitesse d'entrée et la vitesse de rotation de sortie, lorsque la température effective du système de refroidissement dépasse une température critique prédéterminée, qui est supérieure à la température de consigne.

2. Commande selon la revendication 1, **caractérisée en ce que** le régulateur est un régulateur P.I.D.

3. Commande selon la revendication 1 ou 2, **caractérisée en ce que** le limiteur à glissement est placé en arrière du régulateur, **en ce que** le limiteur à glissement envoie la variable réglante du régulateur en tant que vitesse de rotation d'entrée théorique au visco-coupleur, lorsque le rapport entre la vitesse de rotation de sortie et la vitesse de rotation d'entrée se trouve en dessous de la valeur limite prédéterminée, et que le limiteur à glissement envoie au visco-coupleur une vitesse de rotation d'entrée théorique correspondant à cette valeur limite prédéterminée, lorsque cette valeur limite est dépassée.

4. Commande selon l'une quelconque des revendications précédentes, **caractérisée en ce que** la température effective est envoyée parallèlement au régulateur et à la protection de surchauffage.

5. Commande selon l'une quelconque des revendications précédentes, **caractérisée en ce que** les signaux de réglage du régulateur sont envoyés avec le limiteur à glissement et de la protection de surchauffage du visco-coupleur par une logique de priorité, qui interdit le passage du signal de réglage du régulateur avec le limiteur à glissement, lorsque la protection de surchauffage délivre un signal de réglage.
